# EUROPEAN PATENT APPLICATION

(11) **EP 3 398 673 A1**
(43) Date of publication of application: **07.11.2018**
(21) Application number: 17460063.5
(22) Date of filing: 12.10.2017
(51) Int. Cl.: B01D 53/14, B01D 53/32, B01D 53/56, B01D 53/75, B01D 53/78

(54) **A METHOD OF REDUCING HIGH CONCENTRATIONS OF NITROGEN OXIDES IN THE EXHAUST GASES FROM DIESEL ENGINES USING ELECTRON BEAM RADIATION AND WET SCRUBBING**

(30) Priority: 07.02.2017 PL 42046817
(71) Applicant: Instytut Chemii i Techniki Jadrowej, 03-195 Warszawa (PL)
(72) Inventor: The designation of the inventor has not yet been filed
(74) Representative: Brodowska, Iwona

(57) **Abstract**

The method of reducing high concentrations of nitrogen oxides in the exhaust gases from diesel engines according to the invention, is characterized the fact that the exhaust gas is first irradiated with the electron beam technology to reduce the NO, in the dose range of 10 - 12 kGy with a temperature of the exhaust gas not exceeding 90°C, then followed by a wet scrubber method with appropriately prepared process water, with an addition of the strong oxidant / absorbent NaClO₂ solution.

## Description

The invention relates to a hybrid method for reducing high concentrations of nitrogen oxides (NOx) in exhaust gases from diesel engines used in sea transport ships and in stationary power generators using liquid fuel.

For economic reasons, relatively cheap heavy fuel oil (HFO) with a high sulfur content up to 3.5% by weight is mostly incinerated by diesel engines. In exhaust gases from such engines, the concentration of nitrogen oxides reaches 1700 ppmv and the sulfur dioxide concentration (SO₂) to 700 ppmv [1, 2, 3].

According to the current regulation adopted by the International Maritime Organization (IMO) in terms of nitrogen oxides: Tier II - 80% reduction of NOx concentration is required for ships in any port in the world and by Tier III - 90% reduction in NOx concentrations is required for ships entering into the special NOx protection region (Baltic Sea, North Sea and the US East Coast).

Similar restrictions also apply to stationary units on land. Primary methods of reducing nitrogen oxide concentrations are no longer sufficient by modifying the combustion process to provide a maximum NOx reduction of 40%.

It is necessary to remove nitrogen oxides in the exhaust gases emitted from diesel engines. Two secondary methods for the reduction of nitrogen oxide concentrations are available commercially: selective catalytic reduction (SCR) and selective non-catalytic reduction (SNCR).

Stringent regulation are also required for the reduction of SO₂ concentrations in off-gas from ships. To meet both stringent regulation of emission from ships, wet scrubbers using calcium compounds or seawater are installed with excess ratio (high L / G) to purified gases for SO₂ reduction combined with the SCR system to reduce NOx concentrations.

These are two independent installations in which the removal is carried out under different conditions, namely the removal of SO₂ in the scrubber at 20-40°C and the removal of NOx in SCR at temperatures above 300°C. Such solutions are characterized by high investment and operating costs, high energy consumption throughout the process and large space required for the installation of both systems.
Up to now, there are three patents relating to reduction of nitrogen oxides in the waste off-gas:
- In polish patent PL187980, the electron beam irradiation from the accelerator are proposed to reduce nitrogen oxides. Prior to irradiation the gases were moistened, and enriched with a under stoichiometric amount of ammonia during irradiation. After irradiation, the products were collected in the bag-filter. In order to increase the NOx removal efficiency, aliphatic compounds, preferably ethanol was added to the reaction chamber before outlet. Such solution can only be used for land-based sites where ammonia can be stored for the radiation process and where the final product can be collected.
- A similar solution is described in patent US4.882.000, in which ammonia was added to the flue gas before, during, or after irradiation, and a bag filter alone or with an electrostatic precipitator was used to collect the final product.
- US Patent Application US20090188782 (Wet-discharge electron beam flue gas scrubbing treatment) provides a method for reducing sulfur dioxide, nitrogen oxides and particulate matter (PM) emissions from ships. In this method, the off gases are intensively moistened in the humidification units and then irradiated in the process chamber with electron beams from several accelerators. Irradiated gases are directed to a wet electrostatic precipitator, where the nitric and sulfuric acids produced in the process chamber are neutralized by seawater with alkali compounds sprayed in a wet electrostatic precipitator. Products from removal of sulfur dioxide, nitrogen oxides and PM are discharged as a liquid into the sea. To obtain the assumed removal efficiency of SO₂ = 90%, NOx = 70% and PM = 90%, high irradiation doses of 50-70 kGy were used.

Described in the aforementioned patents methods require the use of ammonia (first and second invention), or the use of a wet electrostatic precipitator spraying sea water, and do not provide sufficiently high removal efficiency of gaseous pollutants (third invention).

S,urprisingly, these drawbacks can be overcome by the method of the present invention. The solution for reducing high concentrations of nitrogen oxides in diesel exhaust gases, a two-step process was used: irradiation off-gas with an electron beam (EB) accelerator and a wet sea water scrubber with a solution of a strong oxidizer / nitrogen oxide absorbent. Prior to irradiation, no additives are added to the off-gas and no humidification is introduced. The efficiency of removing nitrogen oxides under EB irradiation strongly depends on the dose of irradiation. At high doses, there is a balance between removal and formation of nitrogen oxides, and further increasing dose results in slight changes in the removal efficiency of nitrogen oxides. This leads to higher energy consumption in the process.
According to the invention, the method for the reduction of high concentrations of nitrogen oxides in diesel exhaust gases is characterized in that the electron beam irradiation with the irradiation dose of 10-12 kGy is the first applied to irradiate the off-gas with temperature below 90°C, then followed by a wet scrubber method with a solution containing a strong oxidant / absorbent NaClO₂. In the present invention the reduction of nitrogen oxides from the simulated waste off-gas was carried out at 10-12 kGy lower doses under EB irradiation, off-gas temperature was not exceeding 90°C, preferably in the range 70-90°C. A high concentrations of nitrogen oxides was partially removed through oxidation by active species produced in the irradiated off-gas, and further reduction of nitric oxide concentrations occurs in a wet sea water scrubber with a strong oxidant / absorbent NaClO₂, preferably in the concentration of amount of 8-25 mM / dm³. The rest of nitrogen oxides in the waste off-gas are oxidized in the liquid solution.
In the present invention, both processes are carried out under optimum conditions to optimize energy consumption in the process. Irradiation of off-gas shall be carried out at a gas temperature not exceeding 90°C, preferably between 70 and 90°C, ensuring maximum removal of NOx. Oxidation of NO and reduction of generated NO₂ in the liquid phase depends on the concentration of the strong oxidizer and pH of the solution. Thus, the concentration of NaClO₂, preferably 8-25 mM / dm³, was determined in the present invention and pH solution, preferably in the range of 6-7 was kept in the buffer solution. As a result, energy consumption has been optimized in the process of reducing high NOx concentrations and high removal efficiency of nitrogen oxides was achieved. In the illustrated example greater than 90% NOx removal efficiency was achieved at a dose of 10 - 12 kGy.
The present invention provides a method for reducing high concentrations of nitrogen oxides in diesel exhaust gases, it is characterized in that the reduction of these pollutants concentrations is based on the electron beam irradiation technology combined with a wet scrubber with a suitable solution.

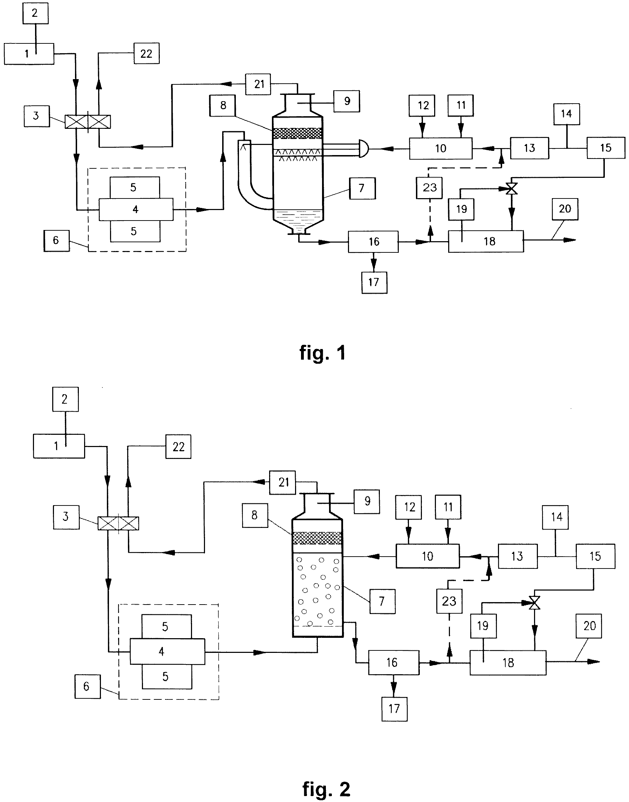

Figure 1 shows a block diagram of an installation for removing high concentrations of nitrogen oxides from diesel exhaust gases according to the invention. At the inlet to the installation 1 the gas inlet parameters are determined, 2 is represented inlet concentrations of the nitrogen oxides (NOx^{p}) and oxygen (O₂^{P}), and off-gas volume flow rate (F1) .

The temperature of the gases varies between 350 and 400°C. Exhaust gases are cooled in a gas / gas exchanger 3. Cooled off gases not exceeding 90°C, preferably in the range of 70-90°C, flow through the process chamber 4 where they are subjected to electron beam irradiation from the accelerator 5, two accelerators are preferred.

As a result of the irradiation, active species are produced in the gases that oxidize NO to into NO₂ (nitrogen dioxide). It converts non-reactive and water-insoluble NO into soluble and reactive NO₂. Nitrogen dioxide in the waste gas reacts with water to form nitric acid.

High concentration of nitrogen oxides was partially removed. The effectiveness of NOx removal depends on the inlet concentration of NOx and the irradiation dose. Higher removal efficiency is achieved for lower inlet concentration of NOx and higher irradiation dose. Irradiated waste gases are directed to a wet scrubber 7 with suitably prepared solution for further reduction of nitrogen oxides.

10 is the process water and 15 is fresh water (sea water 13 according to claim 3), 11 is a strong oxidant / absorbent NaClO₂ solution, preferably in the amount of 8 - 25 mM / dm³ and a Michelis buffer (Na₂HPO₄ i KH₂PO₄) 12 to keep the process solution pH between 6 - 7. The process water is injected by two levels of nozzles at the top of the spray scrubber column.

Irradiated waste gases are fed from the bottom of the column and it flows counter-current with respect to the sprayed process water. Direct gas-liquid interaction occurs. The non-oxidized NO in the waste gases was oxidized into NO₂ by an oxidizer NaClO₂, NO₂ was absorbed in buffered wet scrubber solution, to form nitric acid and hydrochloric acid. Both of these acids are neutralized by the process water with high alkalinity compounds.

The post-reaction water flows down the column from where it is discharged to purification setup. In this water there are numerous PM from diesel and sea water, salts produced in the scrubber.

In the first step, the post-reaction water is directed to the centrifugal separator 16 (or limestone bed in claim 4) in which the solid impurities are separated. These pollutants are discharged into the slurry tank 17. The targeted post-reaction water will then be discharged to the sea (in the case of ships) or to waste water (in stationary objects).

Such water must meet the relevant ecological requirements, for example: appropriate pH, temperature, PAH concentration. The post-reaction water is directed to a reservoir 18 in which its condition is monitored 19, and then purified by dilution with a suitable amount of fresh water 15. The treated water is discharged into the sea or into the sewage 20.

A cleaned flue gas after the exit of the spray tower flows through the droplet separator 8, where are captured entrained droplets of process water and next the chemical composition of the gas is analyzed 9, in particular nitrogen oxides (NOₓ^{k}), oxygen (O₂^{k}) and the volume flow rate of the exhaust gas (F2).

These data will be used to determine the NOx removal efficiency. By using the induced draught fan 21, the cleaned off gases are directed to the gas/gas exchanger 3 for heating and then released into the atmosphere via the chimney 22.

There are two more set-ups in the scheme: 6 - the self-shielding accelerator or the shielding of the accelerator, depending on the type and parameters of the accelerator used; 14 - NaCl solution added to fresh water to produce seawater in the case of stationary generator on land, based in claim 3.

In claim. 4, the post-treatment solution after the filtration of the solids in the limestone bed 16 is recycled by the pipe 23, after adding the oxidant and buffer concentrations therein, to the scrubber as spray, circulating in the closed loop.

The NOx removal efficiency from the exhaust gas in the scrubber depends on the effectiveness of gas-liquid interface in the scrubber. A significantly larger NOx removal can be obtained in a bubble scrubber.

Fig. 2 shows a block diagram of an installation for reducing high concentrations of NOx in exhaust gases from diesel engines using a scrubber bubble invention. In this installation, the spray scrubber was replaced by a bubble scrubber and the remaining components were the same as in Figure 1.

The basic obstacles in using it are due to the dustiness of the exhaust gases and the permissible pressure drop in the scrubber. With high dustiness of the waste gases, exhaust gases may be clogged by a sieve flow gas distribution system at the inlet to the bubble scrubber.

To avoid this, flue gases need to be degusted. For each diesel engine the value of allowable increase in pressure at the outlet of the flue gas is specified in order not to have negative performance of the diesel engine. This value should be taken into account when designing a bubble scrubber.

The practical implementation of the hybrid method for reducing high concentrations of nitrogen oxides in the exhaust gases from diesel engines of the invention can be evaluated from the following example.

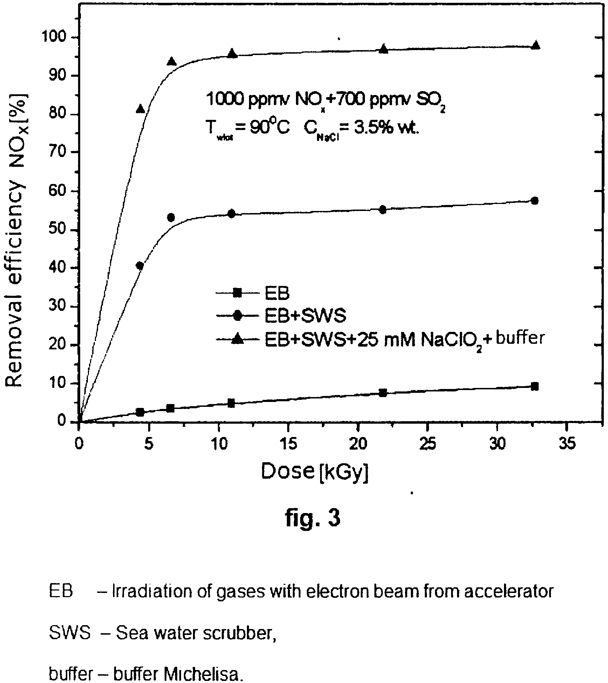

Example: In a continuous flow gas system with a flow rate of 5 m³ / h and NOx inlet concentrations = 1000 ppmv and SO₂ = 700 ppmv, NOx removal tests were performed in three versions. In the first version the off gases were irradiated in the process chamber with an electron beam with various dose. The gas temperature at the inlet of the process chamber was 90°C. Figure 3 presents results of the study. The curve with the square labeled shows NOx removals obtained in the first version of the study under EB (electron beam irradiation). At such a high NOx inlet concentration, low removal of NOx was achieved. In the second test, irradiated waste gases in the process chamber were directed to a seawater scrubber, designated SWS. Model sea water, in our case, constituted distilled water with the addition of 3.5% NaCl. A bubble scrubber consists of two bubbling scrubbers filled with seawater, which were connected in series. The obtained NOx removal efficiency are represented by a curve marked EB + SWS. The NOx removal efficiency exceeds 50%. In the third version of the sea water test, 25 mM NaClO₂ was added and the corresponding amount of Michelis buffer (0.2 M / dm3) was added to maintaining the solution pH being 6.25. NOx removal efficiency was above 90% , it meets Tier III requirements (IMO requirements for NOx emission in NOx special protection zones).

This high reduction of the nitrogen oxides concentration was possibly achieved based on the method of the invention, in which two specific processes were combined and optimal conditions were provided for the reduction of high concentrations of NOx. As a result of EB irradiation of waste off-gas, partial reduction of the concentration of nitrogen oxides was obtained by gas-phase oxidation of NO to NO₂, which further oxidizes and reacts with water vapor contained in the flue gas to form nitric acid. In the process chamber, temperature of 90 ° C was kept to provide an optimal condition for reduction of nitrogen oxides. Irradiated exhaust gases were directed to the wet scrubber with the process water containing a strong oxidant. During irradiated waste gases passing through the wet scrubber, the remaining NO was oxidized into nitrogen dioxide which is absorbed in the liquid phase. Buffers have been added to the process solution to stabilize pH of the solution for the optimal reduction of nitrogen oxides.

### Literature

1. H. Winnes, E. Fridell. Emissions of NOx and particles from maneuvering ships. Transportation Research Part D 15(2010) 204-11.
2. Emission Control Man B&W. Two-stroke Diesel engines, Man B&W Diesel A/S, Copenhagen, 2012, Denmark. D. Cooper. Exhaust emissions from high speed passenger ferries, Atmospheric Environment 35(2001) 4189-4200.

## Claims

1. A method for the reduction of high concentrations of nitrogen oxides from diesel engines off-gas, using electron beam irradiation and wet scrubber methods, wherein the exhaust gas is first irradiated with the electron beam technology with dose in the range of 10-12 kGy, off-gas temperature not exceeding 90°C followed by a wet scrubber method with suitable process solution a prepared with a strong oxidant / absorbent NaClO₂.

2. Method according to claim 1, is **characterized by** the reduction of high concentrations of nitrogen oxides carried out by the irradiation of the off gases in the process chamber with electron beam from the accelerator, preferably from two accelerators, the temperature of off-gas is in the range of 70-90 °C, and the exhaust gases from the process chamber are fed to a wet spray scrubber or a bubbling scrubber, supplied with the process water added with a strong oxidant / absorbent 8 - 25 mM / dm³ NaClO₂, and the Michelis buffer keeping the pH of the water, preferably in the range of 6-7.

3. Method according to claim 1 or claim 2, is **characterized by** the scrubber supplied with a solution based on seawater. Sea water is taken by sea vessels, and land based sea water is prepared by adding the appropriate amount of NaCl to the fresh water.

4. Method according to claim 1 or 2 or 3, is **characterized by** the post-reaction solution filtered in a limestone bed or in a centrifugal separator, and after adjusting the concentration of the oxidant and concentration of the buffer it is returned to the scrubber like a liquid spray, circulating in a closed loop.
